# EUROPEAN PATENT APPLICATION

(11) **EP 2 700 789 A1**
(43) Date of publication of application: **26.02.2014**
(21) Application number: 12773911.8
(22) Date of filing: 20.01.2012
(51) Int. Cl.: F01D 9/04, F01D 11/00, F02C 7/28, F16J 15/06

(54) **TURBINE STATOR VANE AND GAS TURBINE**

(30) Priority: 19.04.2011 JP 2011093045
(71) Applicant: Mitsubishi Heavy Industries, Ltd., Tokyo 108-8215 (JP)
(72) Inventor: TAKAOKA Yoshimasa, Tokyo 108-8215 (JP); MORIMOTO Hitoshi, Tokyo 108-8215 (JP)
(74) Representative: Hess, Peter K. G.
(86) International application number: PCT/JP2012/051198
(87) International publication number: WO 2012/144242

(57) **Abstract**

A turbine vane of the invention includes: a plurality of outer shrouds (8a) that are provided along the turbine circumferential direction so as to be adjacent to each other and form an outer wall of a main passageway; inner shrouds (8b) that form an inner wall; a airfoil body (8c) that protrudes from a front surface of the inner shroud (8b) and defines a flow of combustion gas directed from the upstream side of the main passageway toward the downstream side thereof; and a retainer (8d) which protrudes from a rear surface of the inner shroud (8b) and extends along the turbine circumferential direction, wherein the retainer (8d) is disposed on the downstream side in relation to an intersection point (Q) between a dividing gap (K1) of the adjacent inner shrouds (8b) and a throat line (P) which connects the contact points of a minimal inscribed circle according to the blade shapes of the adjacent airfoil bodies (8c).

## Description

### Technical Field

The present invention relates to a turbine vane and a gas turbine that rotate a rotor by generating a combustion gas from received air.

### Background Art

Hitherto, there is a known gas turbine that rotationally drives a rotor with a turbine vane and a turbine blade alternately arranged in multiple stages. In the gas turbine, compressed air is generated from received air passing through a compressor, a combustion gas is generated by supplying the compressed air into a combustor so as to be burned therein along with fuel, and then the combustion gas passes through an area where the turbine vane and the turbine blade are arranged, thereby rotationally driving the rotor.

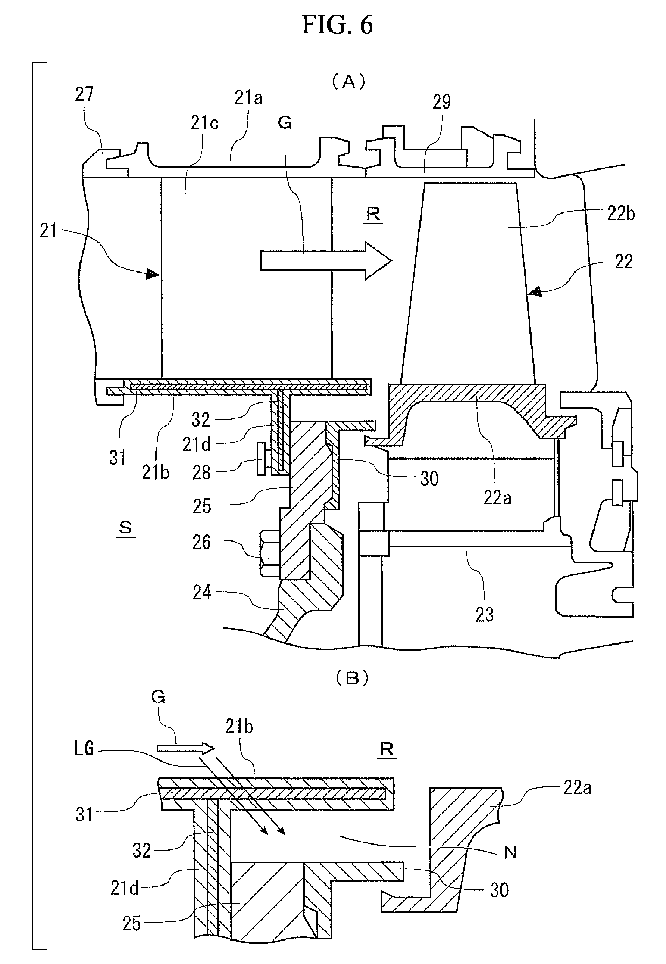

FIG. 6(A) is a cross-sectional view illustrating a main part which shows an example of the gas turbine, and FIG. 6(B) is an enlarged cross-sectional view illustrating the main part (see Patent Document 1). In FIG. 6, Reference numeral 21 denotes a turbine vane, Reference numeral 22 denotes a turbine blade, Reference numeral 23 denotes a turbine disk to which the turbine blade 22 is attached, Reference numeral 24 denotes an intermediate shaft cover, and Reference numeral 25 denotes a support ring which is fixed to the intermediate shaft cover 24 by a bolt 26. Furthermore, in the description below, a first-stage turbine vane (hereinafter, referred to as a "first-stage turbine vane") 21 which is disposed on the most upstream side and to which a transition piece 27 of a combustor (not shown) is connected and a first-stage turbine blade (hereinafter, referred to as a "first-stage turbine blade") 22 which is adjacent to the downstream side of the first-stage turbine vane 21 (the right side of the drawing) will be exemplified.

The first-stage turbine vane 21 is formed in an annular shape by arranging a plurality of segments which are basically identical to each other along the turbine circumferential direction. The first-stage turbine vane 21 includes: an outer shroud 21a which forms an outer peripheral wall; an inner shroud 21b which forms an inner peripheral wall; a airfoil body 21c which is installed between the outer shroud 21a and the inner shroud 21 b; and a retainer 21d which protrudes from the rear surface of the inner shroud 21b (the downside of the drawing). Further, in the first-stage turbine vane 21, the downstream-side surface of the retainer 21d comes into contact with the support ring 25 and is fixed to the support ring 25 through a pin 28.

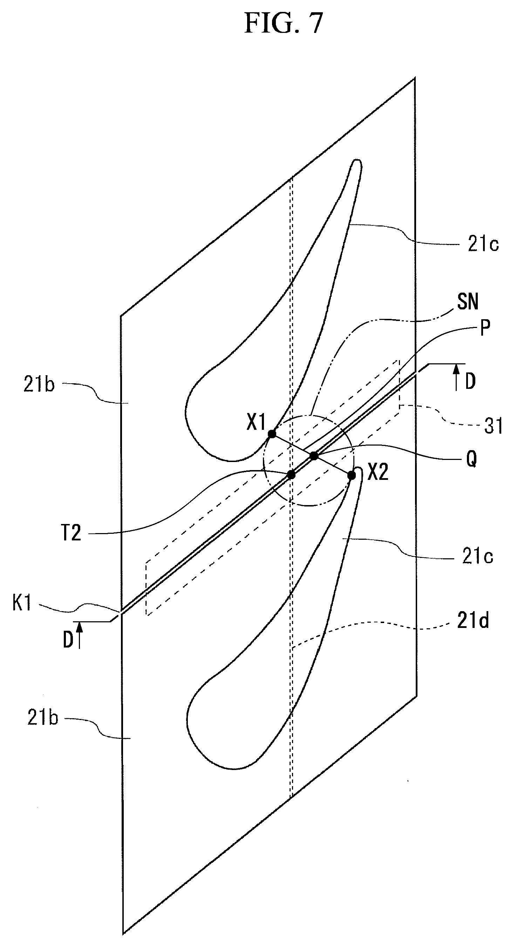

As shown in FIG. 7, the inner shroud 21b of each segment of the first-stage turbine vane 21 is formed in a substantially parallelogram shape (argyle shape) in the front view. The inner shrouds 21b of the plurality of segments are connected to each other so that their edges butt each other in the turbine circumferential direction, and a slight dividing gap K1 is formed between the divided surfaces. Further, the airfoil body 21c has an arc shape which is thinned as it moves closer to the downstream side (the right side of the drawing). Furthermore, the support ring 25 with which the downstream-side surface of the retainer 21d comes into contact receives a load in the thrust direction (the rotor axial direction) due to the differential pressure of the combustion gas G applied to the airfoil body 21c. By the support ring 25, the first-stage turbine vane 21 is suppressed from being displaced toward the first-stage turbine blade 22. Furthermore, the combustion gas G flows from the left side toward the right side in the drawing paper of FIG. 7.

As shown in FIG. 6, the first-stage turbine blade 22 includes a platform 22a which forms an inner peripheral wall and a airfoil body 22b which protrudes outward from the surface of the platform 22a in the turbine radial direction (hereinafter, simply referred to as a "radial direction"). A ring segment 29 which is positioned in an inner periphery of a turbine casing (not shown) is disposed so as to face the front end of the first-stage turbine blade 22.

Accordingly, a main passageway R through which the combustion gas G passes is formed between the outer shroud 21a and the inner shroud 21b, and between the ring segment 29 and the platform 22a. The main passageway R is provided with the airfoil body 21c of the first-stage turbine vane 21 and the airfoil body 22b of the first-stage turbine blade 22.

On the other hand, a casing S which accumulates cooling air discharged from the compressor exists inside the inner shroud 21b of the first-stage turbine vane 21 in the radial direction. The inner shroud 21b is provided with a sealing plate 31 in the rotor axial direction along the divided surface of each segment in order to separate the casing S from the main passageway R through which the combustion gas G flows. Further, a sealing plate 32 is disposed so as to extend in the radial direction along the retainer 21d. In general, since the pressure of air in the casing S is higher than the pressure of a combustion gas in the main passageway R, the combustion gas G does not leak into the casing S.

### Prior Art Document

### Patent Document

Patent Document 1: Japanese Patent Application Laid-Open No. H10-266807

### Summary of the Invention

### Problem to be Solved by the Invention

As shown in FIG. 6(B), an annular space N which forms a small gap between the support ring 25 and the downstream side portion of rear surface of the inner shroud 21b from the retainer 21 d. Since the space N is isolated from the casing S by the retainer 21 d and the support ring 25, the pressure becomes almost equal to the pressure of the space between the first-stage turbine vane 21 and the first-stage turbine blade 22. That is, since the pressure of the combustion gas G which flows through the main passageway R corresponding to the position of the space N is higher than the pressure of the space N, the combustion gas G may easily flow from the dividing gap K1 shown in FIG. 6(B) into the space N along the sealing plate 31. That is, there is a problem in that a leaking gas LG which is a portion of the combustion gas G is involved from the dividing gap K1 into the space N and bums the rear surface of the inner shroud 21b and the top surface of the support ring 25 .

It is an object of the invention to provide a turbine vane capable of suppressing the involvement of a combustion gas from a dividing gap and a gas turbine including the same.

### Means for Solving the Problem

A turbine vane of the invention includes: a plurality of outer shrouds that are provided along the turbine circumferential direction so as to be adjacent to each other and form an outer wall of a main passageway; a plurality of inner shrouds that are provided along the turbine circumferential direction so as to be adjacent to each other and form an inner wall of the main passageway; a airfoil body that protrudes from a front surface of the inner shroud and defines a flow of combustion gas directed from the upstream side of the main passageway toward the downstream side thereof; and a retainer that protrudes from a rear surface of the inner shroud and extends along the turbine circumferential direction, wherein the retainer is disposed on the downstream side in relation to an intersection point between a dividing gap of the adjacent inner shrouds in the turbine circumferential direction and a throat line which connects contact points formed between the airfoil bodies and a minimal inscribed circle formed between the adjacent airfoil bodies in the turbine circumferential direction.

According to the turbine vane of the invention, it is possible to further suppress the leakage of the combustion gas from the main passageway toward the rear surface side of the inner shroud, prevent the burnout of the component such as the rear surface of the inner shroud and the support ring disposed at the rear surface side of the inner shroud with the leakage of the combustion gas which has high temperature and high pressure, and suppress damage or breakage of the welded portion.

Further, in the turbine vane of the invention, the retainer may be fixed to the turbine body through a support ring which the downstream-side surface thereof comes into contact with, and a sealing member may be provided between the retainer and the support ring.

According to the invention, it is possible to ensure the air-tightness in the function of the partition wall defining the upstream side and the downstream side using the support ring and the retainer at the rear surface side of the inner shroud.

The gas turbine of the invention may include the above-described turbine vane.

According to the invention, since the burnout of the inner shroud and the support ring may be reduced and the gas turbine may be operated for a long period of time, the reliability of the gas turbine is improved.

### Advantageous Effect of the Invention

In the turbine vane and the gas turbine according to the invention, since it is possible to suppress the leakage of the combustion gas toward the space on the rear surface side of the inner shroud through the dividing gap from the main passageway, it is possible to suppress damage or breakage of the welded portion or the component disposed at the rear surface side of the inner shroud with the leakage of the combustion gas which has high temperature and high pressure.

### Brief Description of the Drawings

FIG. 1 is a longitudinal cross-sectional view illustrating a schematic configuration of a gas turbine according to an embodiment of the invention.
FIG. 2 illustrates a turbine vane according to the embodiment of the invention, where FIG. 2(A) is a cross-sectional view illustrating a main part of the turbine vane and FIG. 2(B) is a enlarged cross-sectional view illustrating a main part of the turbine vane.
FIG. 3 illustrates a turbine vane according to the embodiment of the invention, and is a front view illustrating a main part of a first-stage turbine vane.
FIG. 4 illustrates a structure of a sealing plate of the turbine vane according to the embodiment of the invention, where FIG. 4(A) is a cross-sectional view illustrating a main part when taken along the line A-A of FIG. 3 and FIG. 4(B) is an enlarged cross-sectional view illustrating a main part when taken along the line B-B of FIG. 4(A).
FIG. 5 comparatively illustrates the cross-sections of the turbine vanes of the embodiment of the invention and the related art, where FIG. 5(A) is a cross-sectional view taken along the line C-C of FIG. 3 and FIG. 5(B) is a cross-sectional view taken along the line D-D of FIG. 7.
FIG. 6 illustrates the turbine vane of the related art, where FIG. 6(A) is a cross-sectional view illustrating a main part and FIG. 6(B) is an enlarged cross-sectional view illustrating the main part.
FIG. 7 is a front view illustrating a main part of the turbine vane of the related art.

### Mode for Carrying Out the Invention

Next, a gas turbine according to an embodiment of the invention will be described by referring to the drawings. Furthermore, the embodiment to be described below is a specific example appropriate for the gas turbine of the invention, and may be limited by various forms which are technically desirable. However, the technical scope of the invention is not limited to the embodiment unless any description for limiting the invention is specified. Further, the components shown in the following embodiment may be appropriately substituted by the existing components, and various variations including the combination with the other existing components may be made. Thus, the features of the invention described in the claims are not limited by the embodiment to be described below.

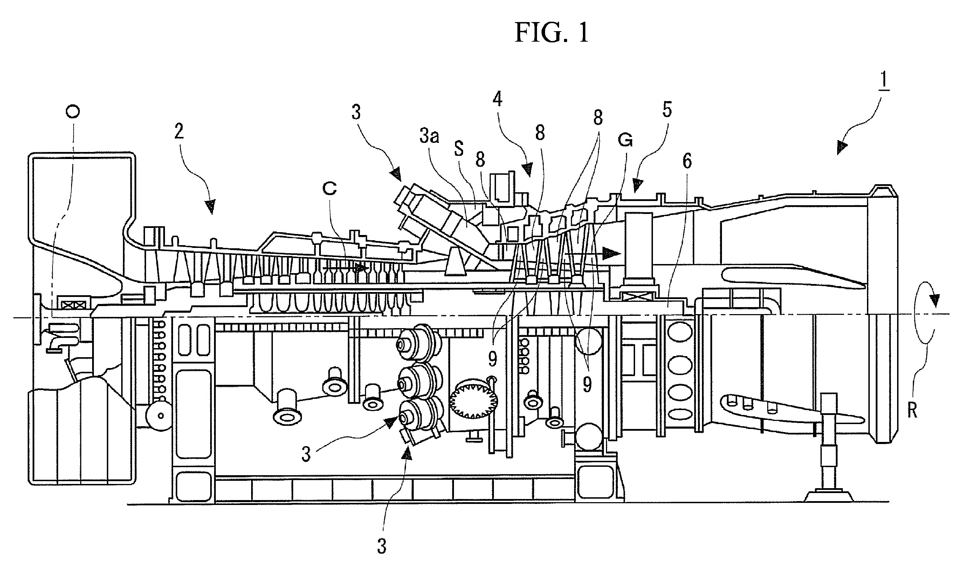

FIG. 1 is a longitudinal cross-sectional view illustrating a schematic configuration of a gas turbine according to the embodiment of the invention.

In FIG. 1, a gas turbine 1 includes a compressor 2, a plurality of combustors 3, a turbine 4, and an exhaust chamber 5 in this order from the upstream side toward the downstream side in a direction where compressed air C and combustion gas G are supplied and discharged. The compressor 2 generates the compressed air C and the compressed air C which is supplied from the compressor 2 is accumulated in a casing S. Further, the plurality of combustors 3 generates the combustion gas G which is a working fluid by mixing the compressed air C with fuel. The turbine 4 generates a rotational force by the combustion gas G which is supplied from the combustor 3. The exhaust chamber 5 discharges the combustion gas G which passes through the turbine 4. Further, the gas turbine 1 includes a rotor 6 which rotates around the axis O serving as the rotation center in the circumferential direction R of the turbine 4.

The turbine 4 includes a turbine vane 8 and a turbine blade 9. The turbine vane 8 and the turbine blade 9 are alternately arranged along the axial direction of the rotor 6. When the combustion gas G generated in the combustor 3 rotates the turbine blade 9 disposed around the shaft of the rotor 6, the thermal energy of the combustion gas G is converted into rotational energy, and is extracted as electric power.

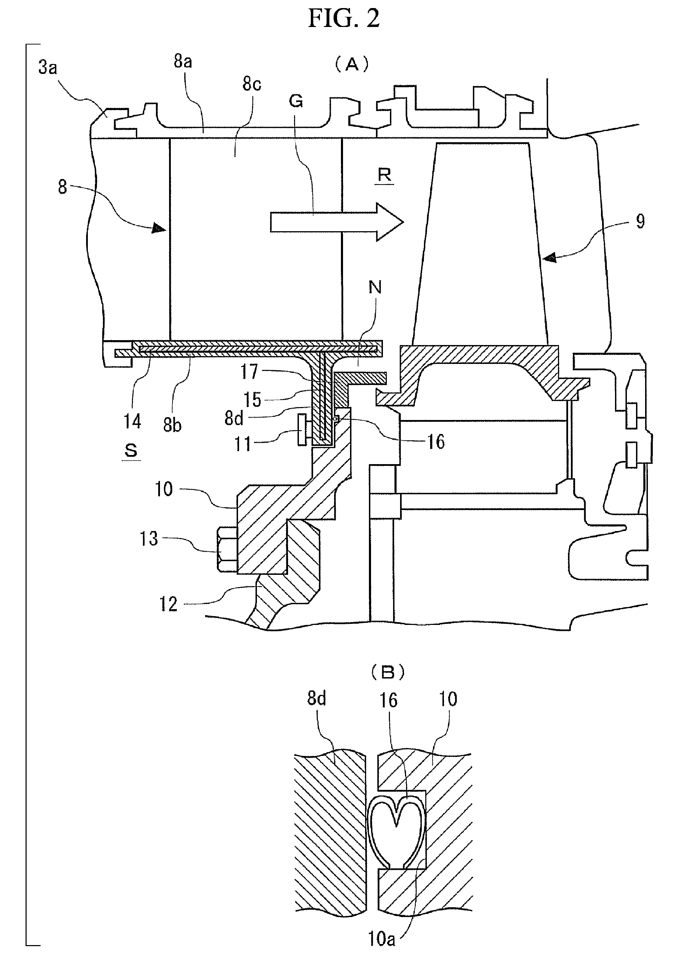

FIG. 2(A) is a cross-sectional view illustrating a main part which shows an example of the turbine vane 8 of the gas turbine 1. Furthermore, in the description below, the first-stage turbine vane (hereinafter, referred to as a "first-stage turbine vane") 8 which is disposed on the most upstream side (the left side of the drawing) and to which the transition piece 3a of the combustor 3 is connected and the first-stage turbine blade (hereinafter, referred to as a "first-stage turbine blade") 9 which is adjacent to the downstream side (the right side of the drawing) of the first-stage turbine vane 8 will be described as an example.

The first-stage turbine vane 8 is formed in an annular shape by arranging a plurality of segments which are basically identical to each other along the turbine circumferential direction. The first-stage turbine vane 8 includes: an outer shroud 8a which forms an outer peripheral wall; an inner shroud 8b which forms an inner peripheral wall; a airfoil body 8c which is installed between the outer shroud 8a and the inner shroud 8b; and a retainer 8d which protrudes from the rear surface of the inner shroud 8b (from the downside of the drawing). Further, in the first-stage turbine vane 8, the downstream-side surface of the retainer 8d comes into contact with the support ring 10 and is fixed to the support ring 10 through a pin 11. Furthermore, the support ring 10 is fixed to the intermediate shaft cover 12 by a bolt 13.

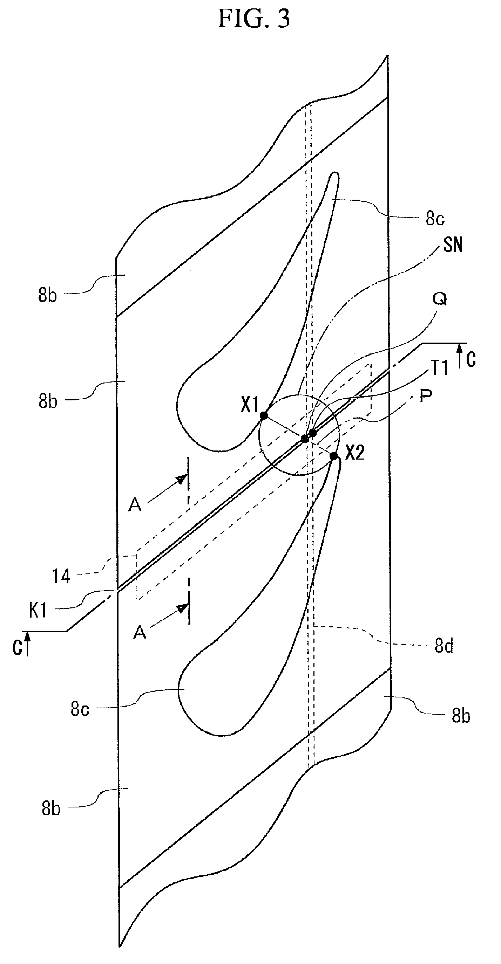

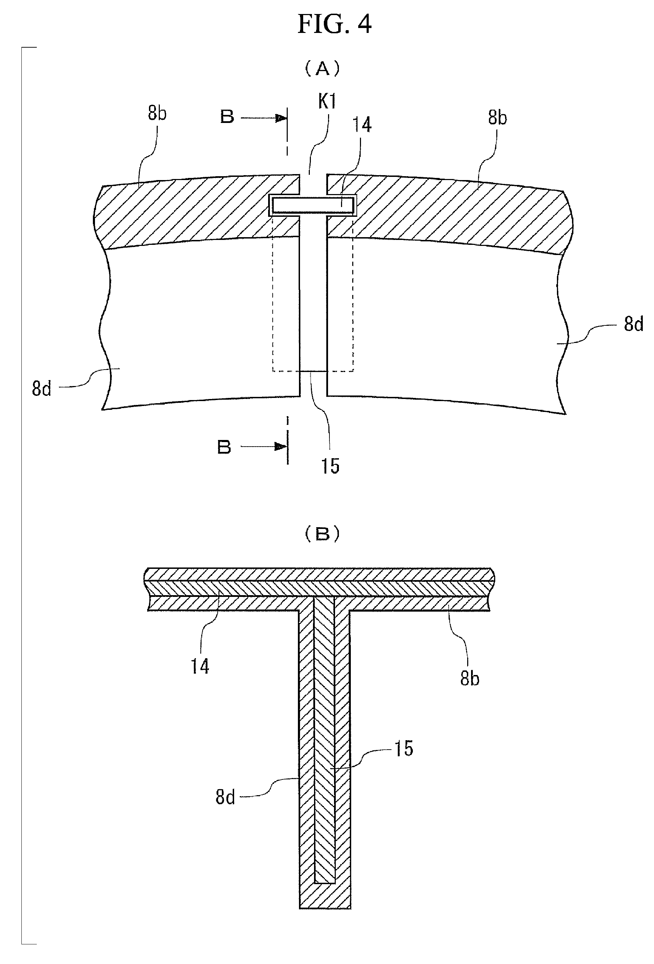

In the inner shroud 8b, as shown in FIG. 3, one segment is formed in a substantially parallelogram shape (argyle shape) in the front view. The inner shrouds 8b of the plurality of segments are connected to each other at the divided surfaces so that their edges butt each other in the turbine circumferential direction. Further, in the divided surfaces of the adjacent inner shrouds 8b, a lateral sealing plate 14 is installed across the butting end surfaces of the adjacent inner shrouds 8b so as to block the dividing gap K1 between the inner shrouds 8b in the turbine circumferential direction (see FIGS. 3, 4(A), and 4(B)).

Furthermore, the airfoil body 8c has an arc shape which is thinned as it moves closer to the downstream side (the right side of FIG. 3). Further, in the embodiment, each airfoil body 8c is provided for each inner shroud 8b.

The retainer 8d extends in an annular shape along the turbine circumferential direction. The downstream-side surface of the retainer 21d with which the support ring 10 comes into contact receives the load in the thrust direction (in the direction along the axis O serving as the shaft of the rotor) due to the differential pressure. By the support ring 10, the first-stage turbine vane 8 is suppressed from being displaced toward the first-stage turbine blade 9. Further, a longitudinal sealing plate 15 is installed between the adjacent retainers 8d in the circumferential direction so as to cross the butting end surfaces of the adjacent retainers 8d in the turbine circumferential direction.

Furthermore, the retainer 8d is disposed on the downstream side in relation to an intersection point Q between a dividing gap K1 of the adjacent inner shrouds 8b and a throat line P which connects contact points X1 and X2 formed between the respective airfoil bodies and a minimal inscribed circle SN formed between the adjacent airfoil bodies 8c.

Further, as shown in FIG. 2(B), a sealing member 16 such as an E-ring (trademark) is provided as a sealing member between the retainer 8d and the support ring 10.

In such a configuration, the retainer 8d and the support ring 10 serve as the partition wall of the casing S. Accordingly, the casing S which is on the upstream side of the retainer 8d has a high pressure, and the space N on the downstream side of the retainer 8d has a low pressure. Further, with regard to the pressure of the combustion gas G in the main passageway R passing through the airfoil body 8c, the pressure is high on the upstream side of the throat line P, but suddenly decreases on the downstream side of the throat line P, so that the pressure becomes almost equal to the pressure between the first-stage turbine vane 8 and the first-stage turbine blade 9.

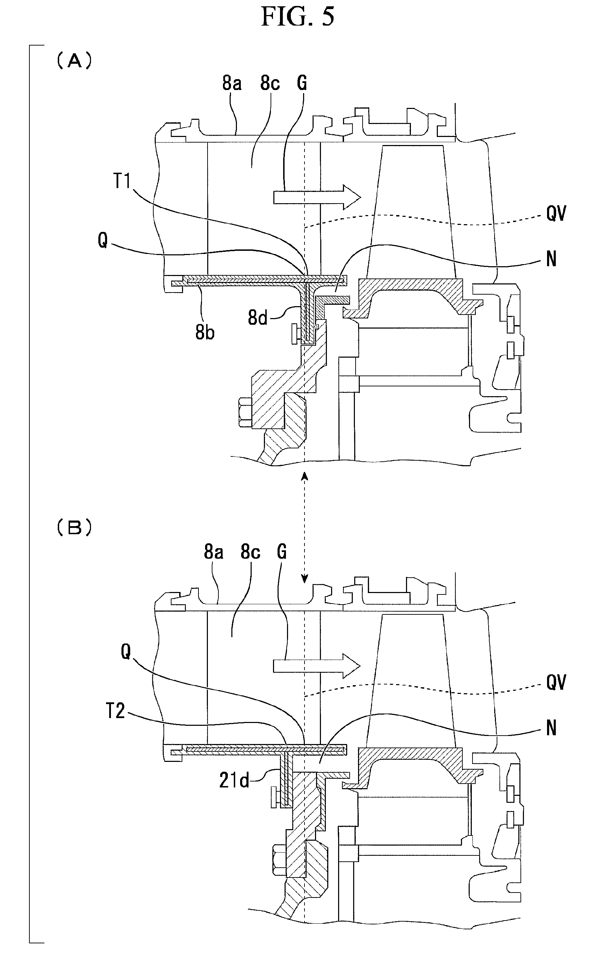

FIG. 5 illustrates the comparison with the turbine vane of the related art, where the specific positional relationship between the intersection point Q of the dividing gap K1 and the throat line P along a change in the pressure of the combustion gas G and the intersection points T1 and T2 of the retainer and the dividing gap K1 is shown in the cross-section in the rotor radial direction. FIG. 5(A) illustrates a positional relationship between the intersection point Q and the intersection point T1 of the embodiment. FIG. 5(B) illustrates a positional relationship between the intersection point Q and the intersection point T2 in the turbine vane of the related art.

Furthermore, in FIG. 5, the position of the intersection point Q in a direction where the combustion gas flows (the rotor axial direction) (the left-right direction in the drawing paper of FIG. 5) is marked at the same position in FIGS. 5(A) and 5(B). Further, for convenience of description, the perpendicular line QV which is perpendicularly upright from the rotor and passing through the intersection point Q is depicted by the dashed line.

As shown in FIG. 3, although the pressure of the combustion gas G suddenly changes with respect to the throat line P serving as a boundary, it may be considered that the pressure of the combustion gas near the dividing gap K1 changes along the dividing gap K1. Thus, with regard to the pressure of the combustion gas G along the dividing gap K1 near the dividing gap K1, the pressure on the upstream side of the intersection point Q between the dividing gap K1 and the throat line P is high, and the pressure suddenly decreases after passing through the point Q. On the other hand, the intersection point T1 between the retainer 8d and the dividing gap K1 is disposed on the downstream side of the intersection point Q. The dividing gap K1 on the downstream side of the intersection point T1 is an area close to the space N with the sealing plate 14 interposed therebetween.

When this relationship is described by referring to FIG. 5, in FIG. 5(A), the intersection point T1 is disposed on the downstream side of the intersection point Q (on the right side of the point Q in the drawing paper). On the other hand, in FIG. 7 which shows the turbine vane of the related art, the intersection point T2 between the retainer 21d and the dividing gap K1 is disposed on the upstream side of the throat line P. In FIG. 5(B) which shows this relationship in the cross-section taken along the rotor axial direction, the intersection point T2 is disposed on the upstream side of the intersection point Q (on the left side of the point Q in the drawing paper). Since a high pressure is maintained near the dividing gap K1 from the points Q to T2 at the position of the intersection point T2 shown in FIG. 5(B), the combustion gas G may easily leak into the space N from the dividing gap K1 between the points Q to T2. On the other hand, since the intersection point T1 shown in FIG. 5 (A) is disposed on the downstream side of the intersection point Q, the pressure near the dividing gap K1 on the downstream side of the intersection point T1 decreases, so that the pressure becomes almost equal to the pressure of the space between the first-stage turbine vane 8 and the first-stage turbine blade 9 on the downstream side. Thus, in the case of the embodiment shown in FIG. 5(A), it is possible to remarkably suppress the combustion gas from leaking from the dividing gap K1 into the space N.

In the embodiment, since the retainer 8d is disposed on the downstream side of the intersection point Q between the throat line P and the dividing gap K1, there is approximately no difference between the pressure of the main passageway R on the downstream side of the throat line P and the pressure of the space N. For this reason, since the amount of the combustion gas which leaks from the main passageway R into the space N through the dividing gap K1 decreases, it is possible to reduce the burnout and the welding breakage of the support ring 10 and the rear surface of the inner shroud 8b.

In addition, the sealing member 16 which is accommodated in a sealing groove 10a is interposed between the retainer 8d and the support ring 10. Thus, since it is possible to ensure the air-tightness in the function of the partition wall defining the upstream side and the downstream side of the casing S using the support ring 10 and the retainer 8d at the rear surface side of the inner shroud 8b, it is possible to prevent the loss of air in the casing.

According to the invention, since the retainer 8d is disposed on the downstream side of the intersection point Q between the throat line P and the dividing gap K1, it is possible to reduce the amount of the combustion gas which leaks from the main passageway R into the space N through the dividing gap K1, and hence it is possible to avoid the burnout or the welding breakage of the upper portion (the outside of the turbine radial direction) of the support ring 10 and the rear surface of the inner shroud 8b. For this reason, since the gas turbine 1 may be operated for a long period of time, the reliability of the gas turbine 1 is improved.

### Industrial Applicability

According to the turbine vane and the gas turbine of the invention, it is possible to suppress the damage or the breakage of the welded portion or the component disposed at the rear surface side of the inner shroud with the leakage of the combustion gas which has high temperature and pressure.

### Description of Reference Numerals

- 1:: GAS TURBINE
- 8:: TURBINE VANE (FIRST-STAGE TURBINE BLADE)
- 8a:: OUTER SHROUD
- 8b:: INNER SHROUD
- 8c:: AIRFOIL BODY
- 8d:: RETAINER
- 8e:: RIB
- 10:: SUPPORT RING
- 16:: SEALING MEMBER (E-RING)
- G:: COMBUSTION GAS
- N:: SPACE
- P:: THROAT LINE
- Q:: INTERSECTION POINT BETWEEN THROAT LINE AND DIVIDING GAP
- R:: MAIN PASSAGEWAY
- T1, T2:: INTERSECTION POINT BETWEEN RETAINER AND DIVIDING GAP
- K1:: GAP (DIVIDING GAP)

## Claims

1. A turbine vane comprising:
a plurality of outer shrouds that are provided along the turbine circumferential direction so as to be adjacent to each other and form an outer wall of a main passageway;
a plurality of inner shrouds that are provided along the turbine circumferential direction so as to be adjacent to each other and form an inner wall of the main passageway;
a airfoil body that protrudes from a front surface of the inner shroud and defines a flow of combustion gas directed from the upstream side of the main passageway toward the downstream side thereof; and
a retainer that protrudes from a rear surface of the inner shroud and extends along the turbine circumferential direction,
wherein the retainer is disposed on the downstream side in relation to an intersection point between a dividing gap of the adjacent inner shrouds in the turbine circumferential direction and a throat line which connects contact points formed between the airfoil bodies and a minimal inscribed circle formed between the adjacent airfoil bodies in the turbine circumferential direction.

2. The turbine vane according to claim 1,
wherein the retainer is fixed to the turbine body through a support ring with which the downstream-side surface thereof comes into contact, and a sealing member is provided between the retainer and the support ring.

3. A gas turbine comprising:
the turbine vane according to claim 1 or 2.
